## Europäisches Patentamt
## European Patent Office
## Office européen des brevets

(11) Veröffentlichungsnummer: **0 196 589**
**B1**

(12) **EUROPÄISCHE PATENTSCHRIFT**

(45) Veröffentlichungstag der Patentschrift:
25.01.89

(21) Anmeldenummer: 86104013.7

(22) Anmeldetag: 24.03.86

(51) Int. Cl.⁴: **F 28 D 3/02,** A 23 C 3/033,
B 01 D 1/06, B 01 D 1/26

(54) Verfahren zum Erwärmen einer Flüssigkeit und Vorrichtung zur Durchführung des Verfahrens.

(30) Priorität: 04.04.85 DE 3512451

(43) Veröffentlichungstag der Anmeldung:
08.10.86 Patentblatt 86/41

(45) Bekanntmachung des Hinweises auf die Patenterteilung:
25.01.89 Patentblatt 89/4

(84) Benannte Vertragsstaaten:
DE FR GB NL

(56) Entgegenhaltungen:
EP-A-0 066 026
DE-A-2 046 423
DE-B-1 009 159
DE-B-1 060 353
DE-C-965 454
GB-A-2 016 288
US-A-2 498 752
US-A-3 322 648
US-A-3 491 821

(73) Patentinhaber: GEA Wiegand GmbH,
Einsteinstrasse 9 - 15, D-7505 Ettlingen (DE)

(72) Erfinder: Dümmler, Ulrich, Bernsteinstrasse 17,
D-7501 Marxzell (DE)

(74) Vertreter: Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)

LIBER, STOCKHOLM 1989

## Beschreibung

Die Erfindung betrifft ein Verfahren nach dem Oberbegriff des Anspruchs 1 und eine Vorrichtung nach dem Oberbegriff des Anspruchs 5.

Bei einem nach der DE-AS 1 060 353 bekannten Verfahren nach dem Oberbegriff des Anspruchs 1 ist nur eine Heizzone vorgesehen.

Bei einem nach der DE-AS 1 009 159 bekannten Verfahren zum Erwärmen einer Flüssigkeit in wenigstens einem vertikal verlaufenden, von außen geheizten Rohr, an dessen Innenwand die Flüssigkeit in Form eines Rieselfilms fließt, sind zwei Heizzonen vorgesehen, wobei die Heiztemperatur der oberen Heizzone niedriger ist als die Heiztemperatur in der unteren Zone. Eine gesonderte Zufuhr von Gas in das wenigstens eine Rohr ist nicht vorgesehen.

Eine Vorrichtung nach dem Oberbegriff des Anspruchs 5 ist nach der US-PS 2 498 752 bekannt. Diese Vorrichtung weist jedoch nur eine Heizzone auf.

Aufgabe der Erfindung ist es, ein Verfahren nach dem Oberbegriff des Anspruchs 1 und eine Vorrichtung nach dem Oberbegriff des Anspruchs 5 anzugeben, die bei einer kurzen Verweilzeit der zu erwärmenden Flüssigkeit bei kleinen Flüssigkeitsinhalten große Wärmeübergangskoeffizienten zu erreichen gestatten, ohne daß die Flüssigkeit verdampft.

Die Lösung dieser Aufgabe ist in Anspruch 1 und in Anspruch 5 angegeben.

Die Temperaturen werden in den Heizzonen bevorzugt so gewählt, daß die Temperaturdifferenzen zwischen dem Rohr und dem Rieselfilm über die ganze Länge des Rohrs möglichst klein sind.

Die unterschiedlichen Temperaturen in den einzelnen Heizzonen lassen sich in einer Eindampfanlage mit mehreren Verdampfern besonders einfach gemäß Anspruch 2 erzeugen, bei einer Sterilisationsanlage gemäß Anspruch 3.

Liegt Dampf vor, dessen Kondensationstemperatur mit fortschreitender Kondensation sinkt, so lassen sich die unterschiedlichen Temperaturen bevorzugt so erzeugen, wie in Anspruch 4 angegeben.

Die Vorrichtung nach Anspruch 5 ist besonders kompakt und konstruktiv einfach aufgebaut.

Die Erfindung wird im folgenden an Ausführungsbeispielen unter Hinweis auf die beigefügten Zeichnungen beschrieben:

Fig. 1 zeigt schematisch eine Vorrichtung zur Durchführung des Verfahrens,

Fig. 2 zeigt schematisch eine Eindampfanlage mit einer erfindungsgemäßen Vorrichtung,

Fig. 3 zeigt schematisch eine Sterilisationsanlage mit einer erfindungsgemäßen Vorrichtung,

Fig. 4 zeigt eine andere Ausführungsform der erfindungsgemäßen Vorrichtung.

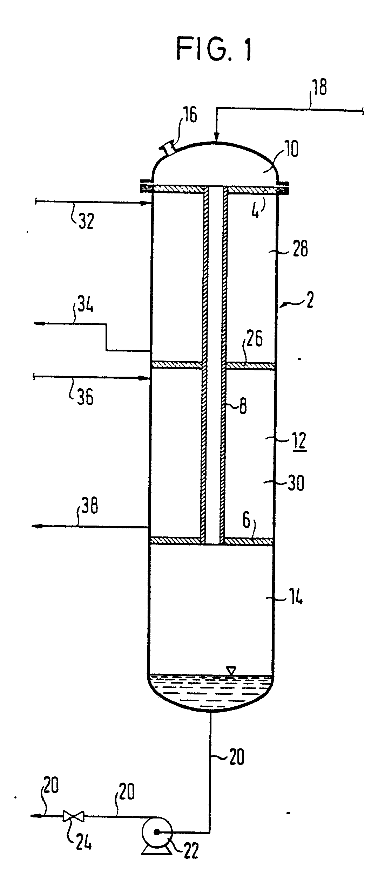

Die Vorrichtung nach Fig. 1 weist einen vertikal langgestreckten Behälter 2 auf, in dem durch einen oberen Rohrboden 4, einen unteren Rohrboden 6 und ein im oberen Rohrboden 4 und im unteren Rohrboden 6 mündendes Rohr 8, ein Flüssigkeitszuführungsraum 10, ein Heizraum 12 und ein Flüssigkeitsabführungsraum 14 abgegrenzt sind.

Bei diesem Ausführungsbeispiel mündet in dem Flüssigkeitszuführungsraum 10 eine an einer Gasdruckquelle einstellbaren Gasdrucks angeschlossene Gaszuführung 16. Die zu erwärmende Flüssigkeit wird durch eine Leitung 18 dem Flüssigkeitszuführungsraum 10 zugeführt und kann dort, wenn mehrere Rohre 8 vorgesehen sind, mittels einer bekannten Verteilereinrichtung auf die einzelnen Rohre 8 verteilt werden.

Von dem Flüssigkeitsabführungsraum 14 wird die erwärmte Flüssigkeit über eine Leitung 20, in der sich hintereinander eine Pumpe 22 und ein Ventil 24 befinden, abgeführt.

Zwischen dem oberen Rohrboden 4 und dem unteren Rohrboden 6 ist ein Zwischenrohrboden 26 angeordnet, der den Heizraum 12 in zwei Heizzonen 28, 30 unterteilt.

Die obere Heizzone 28 wird über eine Leitung 32 mit einem Wärmeträger beschickt, und dieser Wärmeträger wird durch eine unter der Leitung 32 liegende Leitung 34 aus der oberen Heizzone 28 abgezogen.

Entsprechend ist die untere Heizzone 30 durch eine obere Leitung 36 ein Wärmeträger höherer Temperatur, der durch eine untere Leitung 38 abgezogen wird.

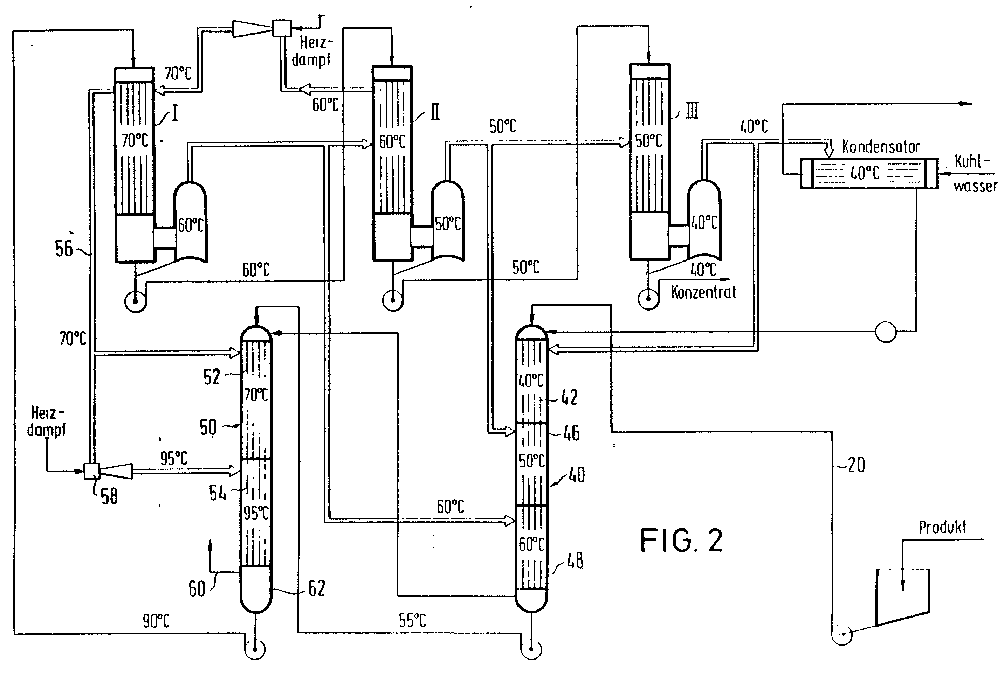

Die in Fig. 2 dargestellte Eindampfanlage ist grundsätzlich bekannt, nicht für sich Gegenstand der Erfindung und wird daher nur insoweit beschrieben, als es das erfindungsgemäße Verfahren und die erfindungsgemäße Vorrichtung betrifft. Die in den einzelnen Teilen der Anlage herrschenden Temperaturen für den Fall, daß Milch eingedampft werden soll, sind in Fig. 2 eingetragen.

Ersichtlich enthält die Eindampfanlage drei Verdampfer I, II und III.

Das Produkt, also im vorliegenden Fall die Milch, wird in einem Rieselfilmerhitzer 40 vorerwärmt, der drei Heizzonen 42, 46, 48 aufweist. Die oberste Heizzone 42 wird mit Brüden aus dem Verdampfer III, die mittlere Heizzone 46 mit Brüden aus dem Verdampfer II und die unterste Heizzone 48 mit Brüden aus dem Verdampfer I erhitzt. Das in dem Rieselfilmerhitzer erwärmte Produkt gelangt in einen zweiten Rieselfilmerhitzer 50 mit zwei Heizzonen 52, 54. Die obere Heizzone 52 wird mit aus dem Verdampfer I über die Leitung 56 abgeführtem Heizdampf unmittelbar erhitzt; die zweite Heizzone 54 wird mit dem über die Leitung 56 abgeführten Dampf nach Aufheizung mittels eines Brüdenverdichters 58 erhitzt.

Zur Aufrechterhaltung eines Drucks in den Rohren des Rieselfilmerhitzers 40, der über dem Dampfdruck des diese Rohre durchströmenden Produkts liegt, dient eine Gasdruckquelle.

Zur Aufrechterhaltung eines Drucks in den Rohren des Rieselfilmerhitzers 50, der über dem Dampfdruck des diese Rohre durchströmenden Produkts liegt, dient eine Gasdruckquelle, die über eine Leitung 60 an den Flüssigkeitsabführungsraum 62 des Rieselfilmerhitzers 50 angeschlossen ist.

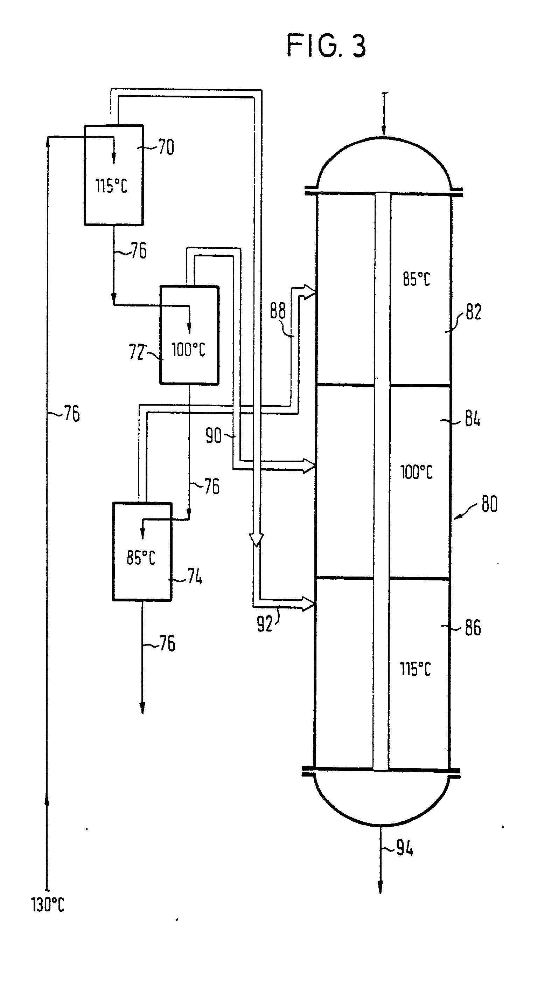

Die Sterilisationsanlage nach Fig. 3 weist Entspannungsverdampfer 70, 72, 74 auf, die der Reihe nach über eine Leitungsanordnung 76 mit sterilisierter Milch beschickt werden, die im Einlaß des Entspannungsverdampfers 70 eine Temperatur von 130°C hat.

Zur Vorerwärmung der Milch dient ein Rieselfilmvorerhitzer 80 mit drei Heizzonen 82, 84, 86.

Die Heizzone 82 wird über die Leitung 88 mit Brüden des Entspannungsverdampfers 74 geheizt, die mittlere Heizzone 84 über eine Leitung 90 mit Brüden des Entspannungsverdampfers 72 und die untere Heizzone 86 über eine Leitung 92 mit Brüden des Entspannungsverdampfers 70. Die aus dem Rieselfilmerhitzer über eine Leitung 94 austretende Milch wird noch enderhitzt, bevor sie in die Leitung 76 gelangt.

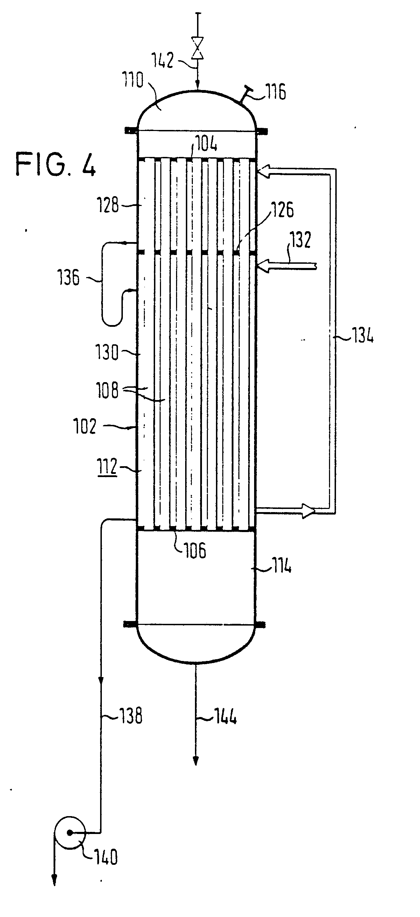

Die Vorrichtung nach Fig. 4 weist einen Behälter 102 auf, in dem durch einen oberen Rohrboden 104, einen unteren Rohrboden 106 und eine Vielzahl von im oberen Rohrboden 104 und im unteren Rohrboden 106 mündenden Rohren 108 ein Flüssigkeitszuführungsraum 110, ein Heizraum 112 und ein Flüssigkeitsabführungsraum 114 abgegrenzt sind. In dem Flüssigkeitszuführungsraum 110 mündet eine an eine Gasdruckquelle einstellbaren Gasdrucks angeschlossene Gaszuführung 116. Zwischen dem oberen Rohrboden 104 und dem unteren Rohrboden 106 ist ein Zwischenrohrboden 126 angeordnet, der den Heizraum 112 in zwei Heizzonen 128, 130 unterteilt.

Die untere Heizzone 130 wird oben über eine Leitung 132 mit einem Heizbrüden beschickt, der im unteren Bereich der Heizzone kondensiert; Brüden geringerer Temperatur wird aus dem unteren Bereich der Heizzone 130 über die Leitung 134 abgezogen und in den oberen Bereich der Heizzone 128 eingeführt.

Kondensat kann von der oberen Heizzone 128 in die untere Heizzone 130 über die Leitung 136 fließen. Das Kondensat beider Heizzonen 128, 130 wird über die Leitung 138 mittels einer Pumpe 140 abgezogen. Das zu erhitzende Produkt wird über die Leitung 142 in den Flüssigkeitszuführungsraum 110 eingeführt und aus dem Flüssigkeitsabführungsraum 114 über die Leitung 144 abgeführt.

Die Vorrichtung nach Fig. 4 kann auch als Kondensator für den über die Leitung 132 zugeführten Brüden verwendet werden, der über die Leitung 138 als Kondensat abgeführt wird. In diesem Fall durchströmt die Rohre 108 als zu erhitzendes "Produkt" Kühlwasser. Liegt der Verdampfer der die Rohre durchströmenden Flüssigkeit niedriger als Atmosphärendruck, so kann als Druckquelle, die in den Rohren einen Gasdruck erzeugt, der höher ist als der Dampfdruck der zu erwärmenden Flüssigkeit, die Atmosphäre verwendet werden.

**Patentansprüche**

1. Verfahren zum Erwärmen einer Flüssigkeit in wenigstens einem vertikal verlaufenden, von außen geheizten Rohr (8, 108), an dessen Innenwand die Flüssigkeit in Form eines Rieselfilms fließt, bei dem der Innenraum des Rohrs (8, 108) unter einem Gasdruck gehalten wird, der höher ist als der Dampfdruck der Flüssigkeit im Rieselfilm, dadurch gekennzeichnet, daß das Rohr (8, 108) voneinander getrennte Heizzonen (28, 30; 42, 46, 48; 52, 54; 82, 84, 86; 128, 130) durchsetzt, deren Temperatur von oben nach unten zunimmt, wobei die Heizzonen (28, 30; 42, 46, 48; 52, 54; 82, 84, 86; 128, 130) mit Dämpfen geheizt werden, die bei unterschiedlichen Temperaturen kondensieren.

2. Verfahren nach einem der vorgenannten Ansprüche zum Vorerwärmen einer Flüssigkeit in einer Eindampfanlage mit mehreren Verdampfern, dadurch gekennzeichnet, daß die Heizung der Heizzonen (42, 46, 48; 52, 54) mit Brüden unterschiedlicher Verdampfer (I, II, III) erfolgt.

3. Verfahren nach einem der vorgenannten Ansprüche zum Vorerwärmen von Milch in einer Sterilisationsanlage, dadurch gekennzeichnet, daß die Heizung der Heizzonen (82, 84, 86) mit Brüden unterschiedlicher Entspannungsverdampfer (70, 72, 74) erfolgt.

4. Verfahren nach einem der vorgenannten Ansprüche, dadurch gekennzeichnet, daß die Heizzonen (28, 30; 42, 46, 48; 52, 54; 82, 84, 86; 128, 130) von einem sie nacheinander durchströmenden Dampf geheizt werden, dessen Kondensationstemperatur mit fortschreitender Kondensation sinkt.

5. Vorrichtung zur Durchführung des Verfahrens nach einem der vorgenannten Ansprüche, mit einem vertikal langgestreckten Behälter (2; 102), in dem durch einen oberen Rohrboden (4; 104), einen unteren Rohrboden (6; 106) und wenigstens ein im oberen Rohrboden (4; 104) und im unteren Rohrboden (6; 106) mündendes Rohr (8; 108) ein Flüssigkeitszuführungsraum (10; 110), ein Heizraum (12; 112) und ein Flüssigkeitsabführungsraum (14; 114) abgegrenzt sind und in dem Flüssigkeitszuführungsraum (10; 110) und/oder in dem Flüssigkeitsabführungsraum (14; 114) eine an eine Gasdruckquelle einstellbaren Gasdrucks angeschlossene Gaszuführung (16; 116) mündet, dadurch gekennzeichnet, daß zwischen dem oberen Rohrboden (4; 104) und dem unteren Rohrboden (6; 106) wenigstens ein von dem wenigstens einen Rohr (8; 108) durchsetzter Zwischenrohrboden (26; 126) angeordnet ist, der den Heizraum (12; 112) in wenigstens zwei Heizzonen (28, 30; 128, 130) unterteilt und daß das Rohr (8; 108) in den Zwischenrohrboden (26; 126) eingewalzt, eingeklebt, eingesteckt oder mit Gummimanschetten befestigt ist.

## Revendications

1. Procédé pour chauffer un fluide dans au moins un tube (8; 108) s'étendant verticalement et chauffé de l'extérieur sur la paroi interne duquel s'écoule le fluide sous forme d'un film ruisselant, dans lequel l'enceinte interne du tube (8; 108) est maintenue sous une pression de gaz qui est supérieure à la pression de vapeur du fluide dans le film ruisselant, caractérisé en ce que le tube (8; 108) traverse des zones de chauffage (28, 30; 42, 46, 48; 52, 54; 82, 84, 86; 128, 130) qui sont séparées les unes des autres et dont la température monte du haut vers le bas, les zones de chauffage (28, 30; 42, 46, 48; 52, 54; 82, 84, 86; 128, 130) étant chauffées par des vapeurs qui de condensent à des températures différentes.

2. Procédé selon la revendication 1, pour préchauffer un fluide dans une installation de concentration par évaporation comprenant plusieurs vaporisateurs, caractérisé en ce que le chauffage des zones de chauffage (42, 46, 48; 52, 54) est obtenu au moyen de vapeurs chaudes provenant de vaporisateurs différents (I, II, III).

3. Procédé selon l'une quelconque des revendications précédentes, pour préchauffer du lait dans une installation de stérilisation, caractérisé en ce que le chauffage des zones de chauffage (82, 84, 86) est réalisé au moyen de vapeurs chaudes provenant de différents vaporisateurs éclair (70, 72, 74).

4. Procédé selon l'une quelconque des revendications précédentes, caractérisé en ce que les zones de chauffage (28, 30; 42, 46, 48; 52, 54; 82, 84, 86; 128, 130) sont chauffées par de la vapeur qui les traverse les unes après les autres et dont la température de condensation baisse à mesure que la condensation se poursuit.

5. Dispositif pour la mise en oeuvre du procédé selon l'une quelconque des revendications précédentes, comprenant un récipient allongé s'étendant verticalement (2; 102), dans lequel une enceinte d'amenée de fluide (10; 110), une enceinte de chauffage (12; 112) et une enceinte d'évacuation de fluide (14; 114) sont délimitées par un plateau à tubes supérieur (4; 104), un plateau à tubes inférieur (6, 106) et au moins un tube (8; 108) débouchant dans le plateau à tubes supérieur (4; 104) et dans le plateau à tubes inférieur (6; 106) et/ou une amenée de gaz (16; 116) débouche dans l'enceinte d'amenée de fluide (14; 114) et est raccordée à une source de gaz sous pression dont la pression peut être réglée, caractérisé en ce qu'il est prévu entre le plateau à tubes supérieur (4; 104) et le plateau à tubes inférieur (6; 106) au moins un plateau à tubes intermédiaire (26; 126) traversé par au moins un tube (8; 108), qui subdivise l'enceinte de chauffage (12; 112) en au moins deux zones de chauffage (28, 30; 128, 130) et en ce que le tube (8; 108) est fixé dans le plateau à tubes intermédiaire (26; 126) par laminage, collage, enfoncement à force ou au moyen de joints en caoutchouc.

## Claims

1. A method for heating a liquid in at least one vertically extending tube (8, 108) which is externally heated and along the inner wall of which the liquid flows in the form of a trickling film, wherein the interior of the tube (8, 108) is maintained under a gas pressure which is higher than the vapour pressure of the liquid in the trickling film, characterised in that the tube (8, 108) passes through heating zones (28, 30; 42, 46, 48; 52, 54; 82, 84, 86; 128, 130) which are separated from one another and the temperature of which increases from the top downwards, wherein the heating zones (28, 30; 42, 46, 48; 52, 54; 82, 84, 86; 128, 130) are heated with vapours which condense at different temperatures.

2. A method according to the preceding Claim for heating a liquid in an evaporation unit with a plurality of evaporators, characterised in that the heating of the heating zones (42, 46, 48; 52, 54) is effected with vapours from different evaporators (I, II, III).

3. A method according to any one of the preceding Claims for preheating milk in a sterilisation unit, characterised in that the heating of the heating zones (82, 84, 86) is effected with vapours from different flash evaporators (70, 72, 74).

4. A method according to any one of the preceding Claims, characterised in that the heating zones (28, 30; 42, 46, 48; 52, 54; 82, 84 86; 128, 130) are heated by a vapour, the condensation temperature of which decreases as condensation progresses and which flows successively through them.

5. An apparatus for carrying out the method according to any one of the preceding claims, with a vertically elongated vessel (2; 102), in which a liquid supply chamber (10; 110), a heating chamber (12; 112) and a liquid discharge chamber (l4; 114) are bounded by an upper tube end (4; 104), a lower tube end (6; 106) and at least one tube (8; 108) opening into the upper tube end (4; 104) and into the lower tube end (6; 106), and in which a gas inlet (16; 116) connected to a gas pressure supply, the gas pressure of which can be adjusted, opens into the liquid supply chamber (10; 110) and/or into the liquid discharge chamber (14; 114), characterised in that an intermediate tube end (26; 126), which is traversed by the at least one tube (8, 108), is disposed between the upper tube end (4; 104) and the lower tube end (6; 106) and divides the heating chamber (12; 112) into at least two heating zones (28, 30; 128, 130), and in that the tube (8; 108) is rolled, bonded or fitted into the intermediate tube end (26; 126) or is secured therein with rubber sleeves.

# FIG. 1

FIG. 2

Heiz-dampf

70°C

I

70°C

60°C

56

60°C

70°C

52

50

95°C

54

58

Heiz-dampf

95°C

60

62

90°C

60°C

II

60°C

50°C

50°C

50°C

50°C

III

50°C

40°C

Konzentrat

40°C

42

46

50°C

40

60°C

48

60°C

55°C

40°C

Kondensator

40°C

Kuhl-wasser

~20

Produkt

EP 0 196 589 B1

3

# FIG. 3

FIG. 4